# EUROPEAN PATENT SPECIFICATION

(11) **EP 1 986 465 B1**
(45) Date of publication and mention of the grant of the patent: **09.01.2013**
(21) Application number: 06832806.1
(22) Date of filing: 17.11.2006
(51) Int. Cl.: G10K 9/22

(54) **ULTRASONIC SENSOR**
ULTRASCHALLSENSOR
CAPTEUR ULTRASONIQUE

(30) Priority: 14.02.2006 JP 2006036226
(43) Date of publication of application: 29.10.2008
(73) Proprietor: Murata Manufacturing Co. Ltd., Nagaokakyo-shi, Kyoto 617-8555 (JP)
(72) Inventor: HAYASHI, Seigo, Nagaokakyo-shi, Kyoto 6178555 (JP); AMAIKE, Shinji, Nagaokakyo-shi, Kyoto 6178555 (JP); NISHIKAWA, Masanaga, Nagaokakyo-shi, Kyoto 6178555 (JP); SHIMA, Kazuo, Nagaokakyo-shi, Kyoto 6178555 (JP)
(74) Representative: Zimmermann, Tankred Klaus
(86) International application number: PCT/JP2006/322927
(87) International publication number: WO 2007/094104

(56) References cited:
- EP-B1- 0 940 800
- WO-A1-02/065446
- DE-A1- 19 744 229
- JP-A- 11 181 888
- JP-A- 11 266 498
- JP-A- 11 266 498
- JP-A- 2002 058 097
- JP-U- 07 011 100
- JP-U- 49 112 101
- JP-U- 56 041 427
- US-A1- 2003 121 331

## Description

### Technical Field

The present invention relates to ultrasonic sensors, and more particularly to an ultrasonic sensor used for, e.g., a back sonar of an automobile.

### Background Art

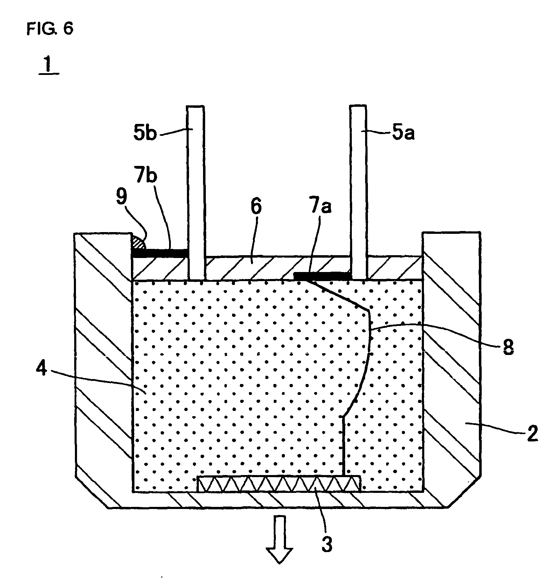

Fig. 6 is a schematic illustration showing an exemplary ultrasonic sensor according to a related art. An ultrasonic sensor 1 includes a cylindrical case 2 with a bottom, the case 2 being made of aluminum or the like. An inner side of a bottom of the case 2 is joined to one side of a piezoelectric element 3. The case 2 is substantially entirely filled with foamable resin 4 such as foamable silicon so as to surround the piezoelectric element 3. Also, a substrate 6 having terminals 5a and 5b is attached to an opening of the case 2 so as to cover the foamable resin 4. Provided on both sides of the substrate 6 are electrodes 7a and 7b which are connected to the terminals 5a and 5b. The one terminal 5a is connected to the other side of the piezoelectric element 3 via the electrode 7a formed on the inner side of the substrate 6, and via a wire 8. The other terminal 5b is connected to the one side of the piezoelectric element 3 via the electrode 7b formed on the outer side of the substrate 6, via a solder 9, and via the case 2.

Using the ultrasonic sensor 1, to measure the distance between the ultrasonic sensor 1 and an object to be detected, the piezoelectric element 3 is excited by applying a drive voltage to the terminals 5a and 5b. As the piezoelectric element 3 is vibrated, the bottom of the case 2 is vibrated, which causes ultrasound to be emitted to a direction orthogonal to the bottom as indicated by an arrow shown in Fig. 6. When the ultrasound emitted from the ultrasonic sensor 1 is reflected by the object to be detected and reaches the ultrasonic sensor 1, the piezoelectric element 3 is vibrated, the vibration is converted into an electric signal, and the electric signal is output from the terminals 5a and 5b. A period of time from the application of the drive voltage to the output of the electric signal is measured, so that a distance between the ultrasonic sensor 1 and the object to be detected may be measured.

With the ultrasonic sensor 1, since the inside of the case 2 is filled with the foamable resin 4, the vibration of the entire case 2 may be reduced. Also, the ultrasound emitted to the inside of the case 2 is dispersed and absorbed by a large number of pores formed in the foamable resin 4. This may efficiently reduce not only the vibration of the case 2, but also the ultrasound remaining in the case 2, thereby improving a reverberation property (see Patent Document 1).
Patent Document 1: Japanese Unexamined Patent Application Publication No. 11-266498

To fill the case with the foamable resin, if the resin is injected into the case and then foamed before the substrate is attached to the case, then the foamable resin may come out from the opening of the case. As a result, only a small internal pressure is applied. Accordingly, the case may not be evenly filled with the foamable resin at the corners thereof. If a filling state of the foamable resin in the case is noticeable, the reverberation property may be deteriorated. Also, if the resin is injected into the case and is foamed after the substrate is attached to the case, the internal pressure becomes large, the foamable resin pushes the substrate from the inside of the case, the substrate is deformed, and thus, the filling state of the foamable resin may be come uneven.

WO 02/065446 A1 describes an ultrasound transducer comprising a housing that includes a semi-contained volume with a wall and a bottom plate that is configured as a membrane, said membrane being functionally linked with a piezoelectric element that is provided with connecting lines. Said volume comprises a damping material and can be fixed to a fixed bearing by means of a support. The support has a support section that projects into the damping material and functionally interacts with the same in such a manner that the entire force required for holding the ultrasound transducer with the housing can be absorbed by the damping material.

DE 197 44 229 A1 describes an ultrasonic transducer having a cup-like housing with an annular wall and a bottom surface that serves as membrane. A piezoelectric element, fitted on the inside of the bottom surface, is connected to bonding conductors. The side opposite the bottom surface is enclosed by a decoupling ring which is configured as a retainer for the bonding conductors.

US 2003/121331 A1 describes an ultrasonic transceiver having an inner housing including a bottom portion, a first tubular side wall extending from one end surface of the bottom portion and a first flange portion formed on an outer peripheral portion of the first tubular side wall. The bottom portion and first tubular side wall provide a tubular cavity formed therebetween, and the piezoelectric member is mounted on the one end surface of the bottom portion in the tubular cavity. An outer housing has a second tubular side wall coaxially arranged around the outer peripheral portion of the first tubular side wall with a predetermined gap therebetween. The second tubular side wall is provided with one end portion which is opposite to one end surface of the first flange portion and contacted thereto. A first absorption member is inserted in the gap between the first tubular side wall and the second tubular side wall.

### Summary of the invention

Accordingly, an object of the present invention is to provide an ultrasonic sensor having a structure which allows a case to be evenly filled with foamable resin and having a good property.

This object is achieved by an ultrasonic sensor according to claim 1.

The present invention provides an ultrasonic sensor including a cylindrical case with a bottom, a piezoelectric element formed on an inner side of the bottom of the case, foamable resin which is injected into the case so as to surround the piezoelectric element, a cap attached to an opening of the case, a terminal attached to the cap so as to be electrically connected to the piezoelectric element, and a through hole formed in the cap.

By forming the through hole in the cap, the resin may be injected into the case from the through hole after the cap is attached to the case with the piezoelectric element provided. The resin in the case is foamed, so that the case is filled with the foamable resin, and an excess amount of the foamable resin is pushed out from the through hole formed in the cap. Accordingly, a suitable internal pressure is applied to the foamable resin and the foamable resin is spread in the case. This may allow the case to be evenly filled with the foamable resin.

In this ultrasonic sensor, a sectional area of the through hole may be preferably determined by conditions of Sh ≤ 5 (mm²), and 0.02 ≤ Sh/Sc ≤ 0.3, where Sc is a sectional area of the opening of the case, and Sh is the sectional area of the through hole formed in the cap.

With such conditions, the suitable internal pressure is applied when the resin is foamed, thereby allowing the case to be evenly filled with the foamable resin. If the sectional area of the through hole is too large, when the resin injected into the case is foamed, the foamable resin is likely pushed out from the through hole, the pressure in the case becomes small, and thus, the case may not be evenly filled with the foamable resin at the corners thereof. If the sectional area of the through hole is too small, when the resin injected into the case is foamed, the foamable resin may not be pushed out from the through hole, the internal pressure becomes large, and thus, the cap may be deformed, and the case may not be evenly filled with the foamable resin.

Also, the cap may preferably include a soft fixing portion which is fixed to the case, and a substrate which is provided in the fixing portion and is harder than the fixing portion. The terminal may be attached to the substrate.

Using a hard material for the cap may increase a fixing strength of the terminal. However, even though the fixing portion for fixing the case is made of the relatively soft material, the fixing strength of the terminal may be increased as long as the substrate to which the terminal is attached is made of the hard material.

In a case where the cap includes the fixing portion and the substrate, the case and the fixing portion may be fixed by fitting, and the fixing portion and the substrate may be fixed by fitting.

By fixing the case and the fixing portion by fitting, and fixing the fixing portion and the substrate by fitting, these components may be fixed easily. In addition, the position of the substrate with respect to the case may be determined by way of the fixture by fitting. Accordingly, the position of the terminal may be accurate.

Also, in the case where the cap includes the fixing portion and the substrate, the opening of the case, the fixing portion, and the substrate may have circular profiles, and the opening of the case, the fixing portion, and the substrate may be concentrically arranged.

As the opening of the case, the fixing portion, and the substrate have circular profiles, and are concentrically arranged, the stress applied from the fixing portion to the substrate may be equally distributed. Therefore, the position of the substrate is not shifted with respect to the case and the fixing portion, the positional accuracy of the terminal attached to the substrate may be increased, and consequently, the terminal may be positioned at a designed position.

### Advantages

With this invention, the resin is injected into the case and then foamed, so that the foamable resin may be spread in the case with a suitable internal pressure while an excess amount of foamable resin is pushed out from the through hole formed in the cap. Accordingly, the case may be evenly filled with the foamable resin, and the ultrasonic sensor may have the good reverberation property.

The above object, other objects, features and advantages of this invention will become apparent from the description of the best mode for carrying out the invention with reference to the drawings.

### Brief Description of the Drawings

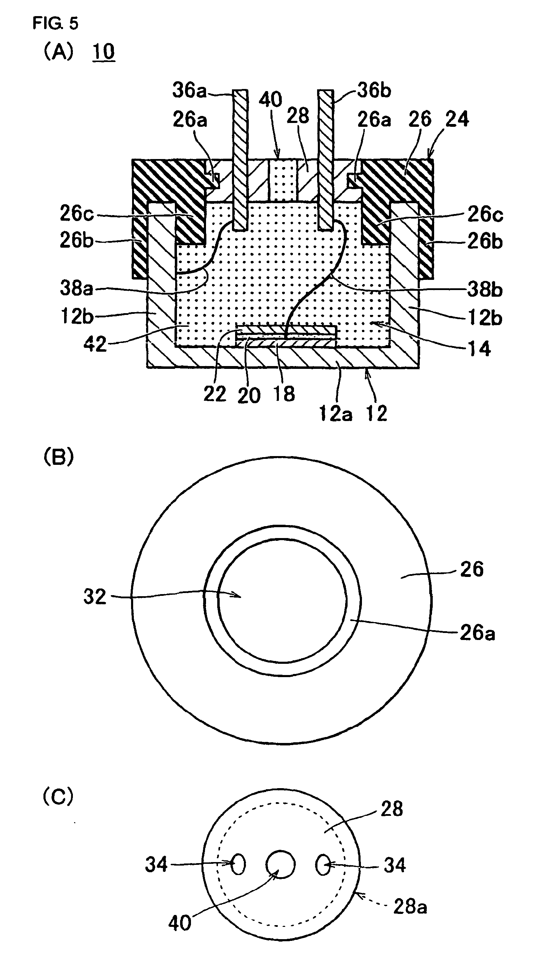

Fig. 1 is a plan view showing an ultrasonic sensor according to an embodiment of the present invention.
Fig. 2 is a cross-sectional view showing the ultrasonic sensor taken along a line A-A shown in Fig. 1.
Fig. 3 is a cross-sectional view showing the ultrasonic sensor taken along a line B-B shown in Fig. 1.
Fig. 4 is an exploded perspective view showing the ultrasonic sensor shown in Fig. 1.
Part (A) of Fig. 5 is a cross-sectional view showing an ultrasonic sensor according to another embodiment of the present invention, part (B) of Fig. 5 is a plan view showing a fixing portion used for the ultrasonic sensor, and part (C) of Fig. 5 is a plan view showing a substrate used for the ultrasonic sensor.
Fig. 6 is a schematic illustration showing an exemplary ultrasonic sensor according to a related art of the present invention.

### Reference Numerals

- 10: ultrasonic sensor
- 12: case
- 14: hollow portion
- 16: recess
- 18: piezoelectric element
- 24: cap
- 26: fixing portion
- 28: substrate
- 30: protrusion
- 36a, 36b: terminal
- 40: through hole
- 42: foamable resin

### Best Mode for Carrying Out the Invention

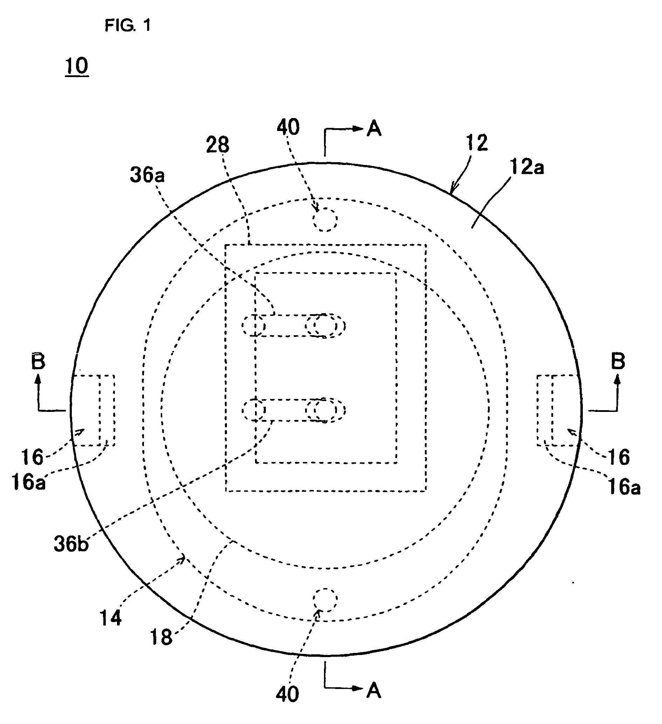

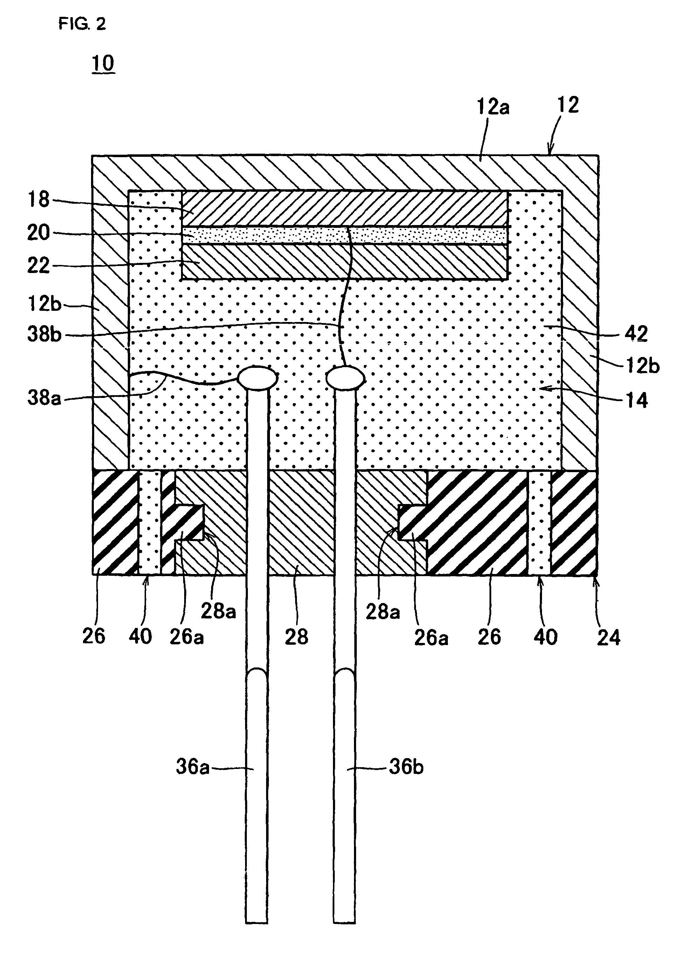

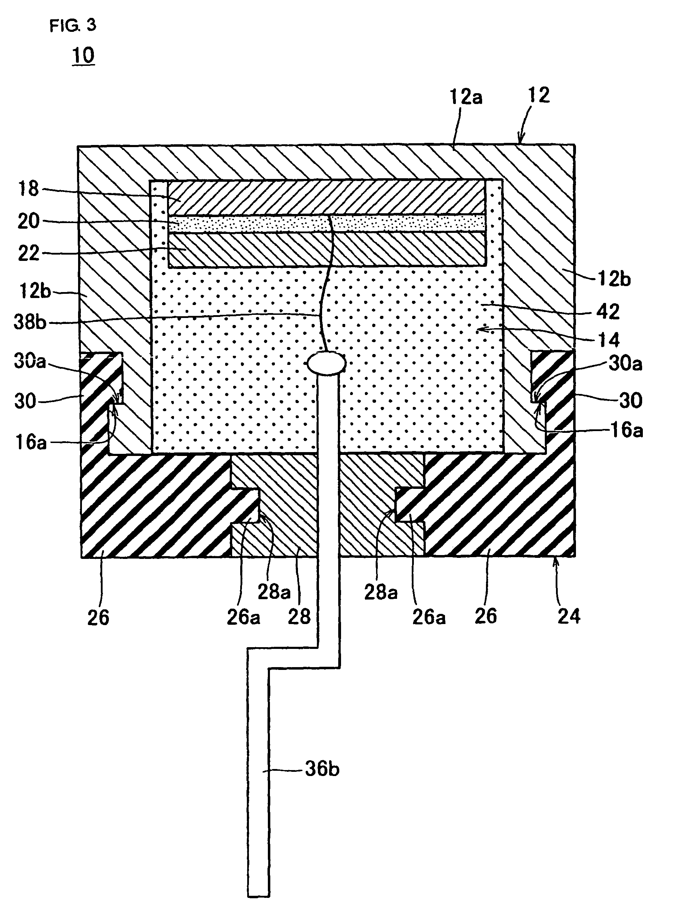

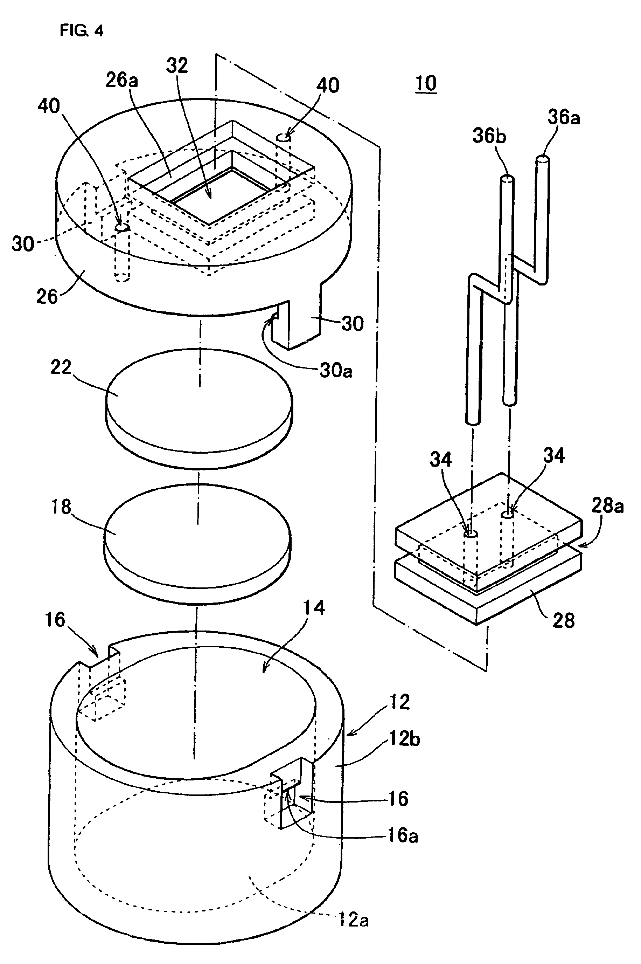

Fig. 1 is a plan view showing an ultrasonic sensor according to an embodiment of the present invention. Fig. 2 is a cross-sectional view taken along a line A-A shown in Fig. 1. Fig. 3 is a cross-sectional view taken along a line B-B shown in Fig. 1. An ultrasonic sensor 10 includes a cylindrical case 12 with a bottom. In particular, the case 12 includes a bottom 12a and a side wall 12b. The case 12 is made of a metal material, for example, aluminum. As shown in Fig. 4, a hollow portion 14 is provided in the case 12. For example, the hollow portion 14 is formed such that both ends thereof are curved and portions between the ends are linear, so as to have a long cross section. The wall thickness of opposite portions of the side wall 12b of the case 12 is small, and the wall thickness of residual opposite portions orthogonal to the former opposite portions is large. Since the spread of the ultrasonic generated from the ultrasonic sensor 10 relies on the profile of the hollow portion 14, the profile of the hollow portion 14 is designed in accordance with a desired property.

In the portions with the large wall thickness of the case 12, recesses 16 are provided at the outer side of the side wall 12b of the case 12. Each recess 16 extends toward the bottom 12a from an end of the case 12 near the opening. The depth of the recess 16 is small near the opening of the case 12, and the depth thereof is large near the bottom 12a. In other words, steps 16a are formed at the recesses 16. The steps 16a are substantially parallel to the end of the case 12 near the opening. The recesses 16 are provided for fixing a cap (described below).

In the case 12, a piezoelectric element 18 is attached to an inner side of the bottom 12a. The piezoelectric element 18, for instance, has a piezoelectric substrate which is a circular plate or a rectangular plate, and electrodes provided on both sides of the piezoelectric substrate. The electrode on one side of the piezoelectric element 18 is bonded on the bottom 12a with a conductive adhesive or the like. An adhesive layer 20 is provided on the electrode disposed on the other side of the piezoelectric element 18, and then a felt 22 is bonded on the adhesive layer 20. The felt 22 absorbs the ultrasound emitted from the piezoelectric element 18 to the inside of the case 12. Also, the felt 22 allows the piezoelectric element 18 to vibrate without disturbance of foamable resin (described below).

A cap 24 is attached to the opening of the case 12. The cap 24 includes a fixing portion 26 for fixing the cap 24 to the case 12, and a substrate 28 which is disposed at a middle portion of the fixing portion 26. The fixing portion 26 is made of a relatively soft resin material, such as silicon rubber. The fixing portion 26 is formed in a disk-like profile having an outer diameter similar to an outer diameter of the case 12. In addition, protrusions 30 are provided at opposite portions of the disk-like fixing portion 26. The protrusions 30 extend from the fixing portion 26 in a thickness direction. Each protrusion 30 is thin at a portion near the fixing portion 26 and thick at a portion distant from the fixing portion 26. In other words, steps 30a are respectively formed at intermediate portions of the protrusions 30.

The fixing portion 26 is attached to the opening of the case 12. At this time, by pressing the fixing portion 26 toward the opening of the case 12, the protrusions 30 of the fixing portion 26 are fitted to the recesses 16 of the case 12. The steps 16a of the recesses 16 engage with the steps 30a of the protrusions 30, and hence, the fixing portion 26 is fixed to the case 12. Since the fixing portion 26 is made of the relatively soft resin material, such as silicon rubber, the protrusions 30 of the fixing portion 26 may be easily fitted to the recesses 16 of the case 12.

The fixing portion 26 has a hole 32 of, for example, a rectangular profile, at the middle portion thereof. A protruded line 26a is formed on an inner wall of the hole 32 at an intermediate portion in a thickness direction of the fixing portion 26. The protruded line 26a extends around the entire inner periphery of the hole 32. The substrate 28 is fitted to the hole 32. For example, the substrate 28 is made of a rigid material, such as polyphenylene sulfide (PPS), which is harder than the silicon rubber. The substrate 28 has a rectangular profile corresponding to the profile of the hole 32 of the fixing portion 26. A recessed line 28a is formed in the periphery of the substrate 28 corresponding to the protruded line 26a. By pushing the substrate 28 into the hole 32 of the fixing portion 26, the protruded line 26a of the fixing portion 26 is fitted to the recessed line 28a of the substrate 28. Accordingly, the substrate 28 is fixed to the fixing portion 26. Since the fixing portion 26 is made of the relatively soft resin material, the substrate 28 may be easily fitted to the fixing portion 26.

The substrate 28 has two terminal holes 34, to which terminals 36a and 36b are press-fitted. The terminals 36a and 36b are made of a conductive material such as metal, and portions thereof located at the outside of the cap 24 are bent like a crank. The bent portions of the terminals 36a and 36b may prevent the terminals 36a and 36b from falling off holes penetrating a printed circuit board when the ultrasonic sensor 10 is mounted on the printed circuit board, and may allow a gap to be provided between the case 12 and the printed circuit board.

In the case 12, the one terminal 36a is connected to the case 12 via a wire 38a, and is electrically connected to the electrode on the one side of the piezoelectric element 18 via the case 12. The other terminal 36b is electrically connected to the electrode on the other side of the piezoelectric element 18 via a wire 38b. For example, soldering is employed for the connection among the case 12, the piezoelectric element 18, the terminals 36a and 36b, and the wires 38a and 38b.

In addition, the fixing portion 26 has, for example, two through holes 40 having a circular profile, in opposite portions of the substrate 28. The through holes 40 are formed such that a sectional area thereof is determined by conditions of Sh ≤ 5 (mm²), and 0.02 ≤ Sh/Sc ≤ 0.3, where Sc is a sectional area of the opening of the case 12, and Sh is the sectional area of the through holes 40 formed in the fixing portion 26 of the cap 24.

The inside of the case 12 and the insides of the through holes 40 formed in the fixing portion 26 are filled with foamable resin 42 such as foamable silicon. The foamable resin 42 before being foamed is injected from first ends of the through holes 40, and heated to be foamed and cured. At this time, since the through holes 40 are formed such that the sectional area thereof is determined by the above-described conditions, an excess amount of foamable resin 42 is pushed out from the through holes 40, and the foamable resin 42 may be expanded in the case 12 with a suitable internal pressure. Therefore, all corners of the case 12 may be filled with the foamable resin 42, and the inside of the case 12 may be filled with the foamable resin 42 evenly.

If the sectional area of the through holes 40 is too large, then, when the resin injected into the case 12 is foamed, the foamable resin 42 is likely pushed out from the through holes 40. As a result, a suitable internal pressure may not be provided. Because of this, the foamable resin 42 may not be injected to the corners of the case 12. On the other hand, if the sectional area of the through holes 40 is too small, then, when the resin injected into the case 12 is foamed, the excess amount of foamable resin 42 may not be pushed out from the through holes 40, the cap 42 may be lifted up, and may be deformed. Because of this, the filling state of the foamable resin 42 may become uneven.

In a case where the ultrasonic sensor 10 is used as a back sonar of an automobile, the piezoelectric element 18 is excited by applying a drive voltage to the terminals 36a and 36b. Although the piezoelectric element 18 is surrounded with the foamable resin 42, the vibration region of the piezoelectric element 18 may be secured by the felt 22 bonded to the piezoelectric element 18. As the piezoelectric element 18 is vibrated, the bottom 12a of the case 12 is vibrated, which causes ultrasound to be emitted to a direction orthogonal to the bottom 12a. When the ultrasound emitted from the ultrasonic sensor 10 is reflected by an object to be detected and reaches the ultrasonic sensor 10, the piezoelectric element 18 is vibrated. The vibration is converted into an electric signal, and the electric signal is output from the terminals 36a and 36b. A period of time from the application of the drive voltage to the output of the electric signal is measured, so that a distance between the ultrasonic sensor 10 and the object to be detected may be measured.

With the ultrasonic sensor 10, since the inside of the case 12 is filled with the foamable resin 42 evenly, the vibration of the entire case 12 may be reduced. While the ultrasound emitted from the piezoelectric element 18 to the inside of the case 12 is absorbed by the felt 22, the ultrasound passing through the felt 22 is dispersed and absorbed by a large number of pores formed in the foamable resin 42. This may efficiently reduces not only the vibration of the case 12, but also the ultrasound remaining in the case 12, thereby improving a reverberation property.

In the ultrasonic sensor 10, as shown in parts (A), (B), and (C) of Fig. 5, the opening of the case 12 may be circular, and the cap 24 may be attached by fitting the relatively soft fixing portion 26 to the opening. The fixing portion 26 is formed in a disk-like profile. Also, concentrically arranged fitting protrusions 26b and 26c are provided respectively at the peripheral edge and at the inner side of the peripheral edge of the fixing portion 26. Since the fitting protrusions 26b and 26c are concentrically arranged, a circular groove is formed between the fitting protrusions 26b and 26c. The end of the side wall 12b of the case 12 near the opening is fitted into the groove, so that the fixing portion 26 is attached to the case 12. In a case where the hollow portion 14 in the case 12 has a profile other than the circular profile, the hollow portion 14 may be formed at a deep portion in the circular case 12, the deep portion being distant from the end of the side wall 12b near the opening. This configuration allows the profile of the end of the side wall 12b of the case 12 near the opening to be a circular profile. Accordingly, the circular fixing portion 26 may be attached to the case 12 regardless of the profile of the hollow portion 14.

At this time, the hole 32 of the fixing portion 26 and the substrate 28 attached to the fixing portion 26 are also formed in circular profiles. In the ultrasonic sensor 10 shown in Fig. 5, a through hole 40 is formed at a center portion of the substrate. The opening of the case 12, the fixing portion 26, and the substrate 28 are concentrically arranged.

As described above, since the opening of the case 12, the fixing portion 26, and the substrate 28 have the circular profiles, and are concentrically arranged, a stress applied from the fixing portion 26 to the substrate 28 may be equally distributed. The position of the substrate 28 is not shifted with respect to the case 12 and the fixing portion 26, and thus, the positional accuracy of the terminals 36a and 36b attached to the substrate 28 may be improved. Accordingly, the ultrasonic sensor 10 having the terminals 36a and 36b located at the designed positions may be provided, and hence, the ultrasonic sensor 10 may correspond to automated mounting.

In the above embodiments, while the cap 24 is formed by assembling the relatively soft fixing portion 26 and the substrate 28 harder than the fixing portion 26, the cap 24 may be formed by one material. In such a case, the cap 24 may be preferably made of a relatively hard material so as to increase a fixing strength of the terminals 36a and 36b.

### EXAMPLE 1

The ultrasonic sensor having the structure shown in Figs. 1 to 4 was manufactured. First, the piezoelectric element 18 was attached to the inner side of the bottom of the case 12 made of aluminum. First ends of the wires 38a and 38b were soldered to the piezoelectric element 18 and to the side wall of the case 12. The felt 22 was bonded to the piezoelectric element 18. Meanwhile, the terminals 36a and 36b were press-fitted to the terminal holes 34 formed in the substrate 28 made of PPS, and the substrate 28 was fitted to the fixing portion 26 made of silicon rubber. Second ends of the wires 38a and 38b were soldered to the terminals 36a and 36b press-fitted to the substrate 28, and the fixing portion 26 was fitted to the case 12. Foaming silicon was injected into the case 12 from the through holes 40 formed in the fixing portion 26, and the foamable silicon was heated at 60°C so as to be foamed and cured. At this time, the foamable silicon pushed out from the through holes 40 was removed, and thus, the ultrasonic sensor was manufactured. Using this ultrasonic sensor, the sectional area of the through holes 40 formed in the fixing portion 26 of the cap 24 was varied, so as to observe the filling state of the foamable silicon in the case 12 and evaluate the results. The results were shown in Table 1.

**Table 1**

| Sample No. | Sh (mm²) | Sc (mm²) | Sh/Sc | Evaluation | State |
|---|---|---|---|---|---|
| 1 | 0.2 | 250 | 8×10⁻⁴ | Not Good | Foaming Si not pushed out, uneven filling, fixing portion deformed |
| 2 | 5 | 250 | 2×10⁻² | Good | Good |
| 3 | 20 | 250 | 8×10⁻² | Not Good | Uneven filling |
| 4 | 5 | 100 | 5×10⁻² | Good | Good |
| 5 | 5 | 15 | 3×10⁻¹ | Good | Good |
| 6 | 8 | 15 | 5×10⁻¹ | Not Good | Uneven filling |
| 7 | 10 | 15 | 7×10⁻¹ | Not Good | Uneven filling |

As shown in the results of Sample Nos. 3, 6 and 7 in Table 1, when the sectional area Sh of the through holes 40 was above 5 (mm²), or the ratio Sh/Sc of the sectional area Sh of the through holes 40 to the sectional area Sc of the opening of the case 12 was above 0.3, the foamable silicon was likely pushed out from the through holes 40 when the foamable silicon was foamed. As a result, only a small internal pressure was provided in the case 12. Accordingly, the case 12 could not be evenly filled with the foamable silicon. As shown in the result of Sample No. 1 in Table 1, when the Sh/Sc was below 0.02, the excess amount of foamable silicon was not pushed out from the through holes 40. Due to this, the internal pressure of the case 12 increased, the filling state of the foamable silicon became uneven, and the fixing portion 26 of the cap 24 was deformed. In contrast, as long as the conditions of Sh ≤ 5 (mm²), and 0.02 ≤ Sh/Sc ≤ 0.3 were satisfied, the case 12 could be filled with the foamable silicon evenly.

### EXAMPLE 2

The ultrasonic sensor having the structure shown in Fig. 5 was manufactured. The ultrasonic sensor was manufactured similarly to Example 1 except that the opening of the case 12, the fixing portion 26, and the substrate 28 were formed in the circular profiles, and were concentrically arranged. As a comparative example, an ultrasonic sensor was manufactured in which the profile of the substrate 28 was ellipsoidal and the terminals 36a and 36b were aligned in a longitudinal direction of the substrate. For those ultrasonic sensors, the positional accuracy of the terminals 36a and 36b were measured. The center of the case 12 was the reference of the positional accuracy of the terminals 36a and 36b, and the shifting amount of the terminals 36a and 36b from the designed positions was measured with respect to the reference. The shifting amount was measured in two directions (X-direction and Y-direction) including a direction along the terminals 36a and 36b, and in a direction orthogonal thereto. The number of samples for the measurement was ten for the ultrasonic sensor of the present invention, and ten for the comparative example. An average and a standard deviation (σn - 1) were calculated for each sample, and the results were shown in Table 2.

**Table 2**

| | X-direction positional shift of terminals (average) (mm) | X-direction positional shift of terminals (σn - 1) (mm) | Y-direction positional shift of terminals (average) (mm) | Y-direction positional shift of terminals (σn - 1) (mm) |
|---|---|---|---|---|
| Present invention | 0.06 | 0.03 | 0.05 | 0.02 |
| Comparative example | 0.25 | 0.14 | 0.21 | 0.12 |

As shown in Table 2, even though the assembly method of the ultrasonic sensor of the present invention was simple such that the substrate 28 was merely fitted to the fixing portion 26 made of silicon rubber, the terminals 36a and 36b could be disposed with a markedly high positional accuracy.

## Claims

1. An ultrasonic sensor comprising:
a cylindrical case (12) with a bottom (12a);
a piezoelectric element (18) formed on an inner side of the bottom (12a) of the case (12);
foamable resin (42) which is injected into the case (12) so as to surround the piezoelectric element (18);
a cap (24) attached to an opening of the case (12); and
a through hole (40) formed in the cap (24);
wherein the cap (24) includes a soft fixing portion (26) which is fixed to the case (12), and a substrate (28) which is provided in the fixing portion (126) and is harder than the fixing portion (26),
**characterized in that**
two terminals (36a, 36b) are attached to the substrate of the substrate of the cap (24) so as to be electrically connected to the piezoelectric element (18).

2. The ultrasonic sensor according to claim 1, wherein a sectional area of the through hole (40) is determined by the following conditions:
Sh ≤ 5 (mm²), and 0.02 ≤ Sh/Sc ≤ 0.3,
where Sc is a sectional area of the opening of the case (12), and Sh is the sectional area of the through hole (40) formed in the cap (24).
wherein the foamable resin (42) is a foamable silicon.

3. The ultrasonic sensor according to claim 1 or 2, wherein the case (12) and the fixing portion (26) are fixed by fitting, and the fixing portion (26) and the substrate (28) are fixed by fitting.

4. The ultrasonic sensor according to any one of claims 1 to 3, wherein the opening of the case (12), the fixing portion (26), and the substrate (28) have circular profiles, and the opening of the case (12), the fixing portion (26), and the substrate (28) are concentrically arranged.

## Patentansprüche

1. Ein Ultraschallsensor, der folgende Merkmale aufweist:
ein zylindrisches Gehäuse (12) mit einem Boden (12a);
ein piezoelektrisches Element (18), das auf einer Innenseite des Bodens (12a) des Gehäuses (12) gebildet ist;
ein schäumbares Harz (42), das in das Gehäuse (12) eingespritzt ist, um das piezoelektrische Element (18) zu umgeben;
eine Abdeckung (24), die an eine Öffnung des Gehäuses (12) angebracht ist; und
ein Durchgangsloch (40), das in der Abdeckung (24) gebildet ist;
wobei die Abdeckung (24) einen weichen Befestigungsabschnitt (26) umfasst, der an dem Gehäuse (12) befestigt ist, und ein Substrat (28), das in dem Befestigungsabschnitt (126) bereitgestellt ist und härter ist als der Befestigungsabschnitt (26),
**dadurch gekennzeichnet, dass**
zwei Anschlüsse (36a, 36b) an das Substrat der Abdeckung (24) angebracht sind, um elektrisch mit dem piezoelektrischen Element (18) verbunden zu sein.

2. Der Ultraschallsensor gemäß Anspruch 1, bei dem ein Querschnittbereich des Durchgangslochs (40) durch nachfolgende Bedingungen bestimmt ist:
Sh ≤ 5 (mm²), und 0,02 ≤ Sh/Sc ≤ 0,3,
wobei Sc ein Querschnittbereich der Öffnung des Gehäuses (12) ist, und Sh der Querschnittbereich des Durchgangslochs (40) ist, das in der Abdeckung (24) gebildet ist,
wobei das schäumbare Harz (42) ein schäumbares Silikon ist.

3. Der Ultraschallsensor gemäß Anspruch 1 oder 2, bei dem das Gehäuse (12) und der Befestigungsabschnitt (26) durch Einpassen befestigt sind und der Befestigungsabschnitt (26) und das Substrat (28) durch Einpassen befestigt sind.

4. Der Ultraschallsensor gemäß einem der Ansprüche 1 bis 3, bei dem die Öffnung des Gehäuses (12), der Befestigungsabschnitt (26) und das Substrat (28) kreisförmige Profile aufweisen und die Öffnung des Gehäuses (12), der Befestigungsabschnitt (26) und das Substrat (28) konzentrisch angeordnet sind.

## Revendications

1. Capteur à ultrasons comprenant :
un boîtier cylindrique (12) ayant un fond (12a) ;
un élément piézoélectrique (18) formé sur une face interne du fond (12a) du boîtier (12) ;
une résine expansible (42) qui est injectée dans le boîtier (12) de façon à entourer l'élément piézoélectrique (18) ;
un couvercle (24) attaché à une ouverture du boîtier (12) ; et
un trou débouchant (40) formé dans le couvercle (24) ;
le couvercle (24) comprenant une partie de fixation souple (26) qui est fixée au boîtier (12), et un substrat (28) qui est prévu dans la partie de fixation (126) et qui est plus dur que la partie de fixation (26),
**caractérisé en ce que**
deux bornes (36a, 36b) sont attachées au substrat du couvercle (24) de façon à être électriquement connectées à l'élément piézoélectrique (18).

2. Capteur à ultrasons selon la revendication 1, dans lequel une aire en coupe transversale du trou débouchant (40) est déterminée par les conditions suivantes :
Sh ≤ 5 (mm²), et 0,02 ≤ Sh/Sc ≤ 0,3,
où Sc est l'aire en section transversale de l'ouverture du boîtier (12), et Sh est l'aire en section transversale du trou débouchant (40) formé dans le couvercle (24),
dans lequel la résine expansible (42) est une silicone expansible.

3. Capteur à ultrasons selon la revendication 1 ou 2, dans lequel le boîtier (12) et la partie de fixation (26) sont fixés par encastrement, et la partie de fixation (26) et le substrat (28) sont fixés par encastrement.

4. Capteur à ultrasons selon l'une quelconque des revendications 1 à 3, dans lequel l'ouverture du boîtier (12), la partie de fixation (26) et le substrat (28) ont des profils circulaires, et l'ouverture du boîtier (12), la partie de fixation (26) et le substrat (28) sont disposés de façon concentrique.
